# EUROPÄISCHE PATENTANMELDUNG

(11) **EP 1 359 504 A1**
(43) Veröffentlichungstag der Anmeldung: **05.11.2003**
(21) Anmeldenummer: 02009940.4
(22) Anmeldetag: 03.05.2002
(51) Int. Cl.: G06F 9/445

(54) **Verfahren zur Konfiguration bzw. Steuerung einer elektronisch steuerbaren, modularen Anlage**

(71) Anmelder: SAUER & Partner GmbH, 35043 Marburg (DE)
(72) Erfinder: Sauer, Martin, 35043 Marburg (DE)
(74) Vertreter: Böck, Bernhard, Dipl.-Ing.

(57) **Zusammenfassung**

Die Erfindung betrifft ein Verfahren zur Konfiguration bzw. Steuerung einer modularen Anlage (3), insbesondere zur Konfiguration (4) eines Server-Computers (3), wobei die Konfiguration automatisch sowie anhand zumindest eines anlagenspezifischen Skripts (7) erfolgt.

Das erfindungsgemäße Verfahren zeichnet sich dadurch aus, dass das Skript (7) anhand von Informationen über den Komponenten- und/oder Betriebsstatus der Anlage (3) automatisch erzeugt wird. Dabei können die Informationen über den Komponenten- und/oder Betriebsstatus der Anlage (3) manuell eingegeben, insbesondere jedoch ebenfalls automatisch ermittelt werden.

Dank der Erfindung ist es möglich, Konfiguration, Steuerung und Wartung von Anlagen, insbesondere Konfiguration und Wartung von komplexen weitverzweigten Servernetzwerken, zu zentralisieren und zu automatisieren. Insbesondere der zur Neu- oder Umkonfiguration einer Vielzahl an Servercomputern notwendige Aufwand kann dank des erfindungsgemäßen Verfahrens ganz entscheidend verringert werden.

## Beschreibung

Die Erfindung betrifft ein Verfahren zur Konfiguration bzw. Steuerung einer elektronisch steuerbaren, modularen Anlage, insbesondere eines Servercomputers, nach dem Oberbegriff des Patentanspruchs 1.

Verfahren der eingangs genannten Art kommen insbesondere dort zum Einsatz, wo elektronisch steuerbare Anlagen mittels automatischer, vorzugsweise sequentieller Abarbeitung einer Anzahl anlagenspezifischer Steuerbefehle eine Grundkonfiguration oder Umkonfiguration erhalten sollen bzw. wo es gilt, solche Anlagen teil- oder vollautomatisch zu steuern.

Die automatische Abarbeitung einer Serie oder Sequenz von Einzelbefehlen erfolgt in der Praxis zumeist in Form einer zusammengefassten Befehlsfolge oder Routine bzw. in Form eines eine Anzahl von Einzelbefehlen enthaltenden sogenannten Skripts. Hierbei ist es zunächst erforderlich, dass das Skript bzw. die in einem Skript enthaltenen Einzelbefehle mit der zu konfigurierenden bzw. zu steuernden Anlage einerseits grundsätzlich kompatibel sein müssen. Zudem müssen diese Skripte bzw. die darin enthaltenen Einzelbefehle oder Eingabedaten an einen etwaigen speziellen Aufbau bzw. spezielle Komponenten der Anlage angepasst sein, um ein fehlerfreies Abarbeiten des Skripts und ein fehlerfreies Funktionieren der Anlage zu gewährleisten.

Zusätzlich muss im Fall beispielsweise kontinuierlicher Steuerung einer Anlage über ein bzw. mehrere Skripte auch der jeweilige Betriebszustand der Anlage in regelmäßigen Abständen ermittelt und bei der Zusammenstellung bzw. Ausführung der Skripte gegebenenfalls berücksichtigt werden.

Um ein anlagenspezifisches bzw. den momentanen Betriebsstatus der Anlage berücksichtigendes Skript korrekt zusammenstellen zu können, ist es somit notwendig, dass zunächst Informationen über die Art der Anlage sowie ihrer Komponenten und/oder über den Betriebsstatus der Anlage ermittelt werden, und dass sodann auf Basis dieser Informationen das jeweils passende Skript aus entsprechenden Einzelbefehlen zusammengestellt wird. Soll durch eines oder mehrere Skripte zudem beispielsweise eine kontinuierliche Steuerung der Anlage erfolgen, so ist es bei der Erzeugung des bzw. der hierfür zum Einsatz kommenden Skripte erforderlich, neben dem momentanen Betriebsstatus der Anlage auch einen hiervon gegebenenfalls abweichenden, momentanen Sollstatus zu berücksichtigen.

Bei einer derartigen Anlage kann es sich beispielsweise, jedoch keineswegs ausschließlich, um einen Servercomputer handeln, über welchen beispielsweise in einem Netzwerk Daten und/oder Dienstleistungen zur Verfügung gestellt werden sollen. Derartige Servercomputer sind in den meisten Fällen modular aufgebaut, um an Kundenanforderungen angepasst werden zu können. Bereits bei der Erst- bzw. Grundkonfiguration eines derartigen modularen Servercomputers, die am Aufstellungsort beim Anwender erfolgt, sind zumeist eine Vielzahl einzelner Konfigurationsschritte zu durchlaufen, bevor der Servercomputer in Betrieb gehen und die vorgesehenen Dienste im Netzwerk übernehmen kann.

Lediglich beispielshalber seien hier genannt die Hardwarekonfiguration, also die Abstimmung der einzelnen im Servercomputer enthaltenen Komponenten untereinander mittels entsprechender Einstellung von Variablen beispielsweise im BIOS-ROM des Servercomputers, die Festlegung der Zugriffsart des Servercomputers auf Speichermedien, wie beispielsweise Magnetplatten (RAID-Konfiguration) oder die Installation bzw. das Aufspielen von Betriebssystem- und ggf. Anwendungskomponenten. Somit wird deutlich, dass eine derartige Grundkonfiguration eines Servercomputers durchaus die Eingabe etlicher Dutzend bis einiger Hundert Einzelbefehle bzw. serverspezifischer Einstellungsdaten erfordern kann.

Soll nun nicht nur eine einzige Anlage bzw. ein einzelner Servercomputer konfiguriert werden, sondern wird dies für eine in einem Unternehmen vorhandene Mehrzahl oder gar Vielzahl von gleichen oder ähnlichen Anlagen erforderlich, so ist es hierzu im Stand der Technik bekannt, mehrere oder alle zur Konfiguration erforderlichen Befehle und gegebenenfalls Eingabedaten zu einer entsprechenden Befehlsfolge bzw. zu einem Skript zusammenzufassen, welches sodann zur automatischen Konfiguration einer beliebigen Anzahl im Wesentlichen identischer Anlagen bzw. Server eingesetzt werden kann.

Bei den bekannten gattungsgemäßen Verfahren ist es hierzu jedoch stets erforderlich, zunächst manuell die Konfiguration einer für alle zu konfigurierenden Anlagen bzw. Server repräsentativen Musteranlage durchzuführen und diese Musterkonfiguration zu protokollieren bzw. ein entsprechendes Abbild dieser Musterkonfiguration zu erzeugen. Mit den im Protokoll bzw. Abbild dieser Musterkonfiguration enthaltenen Informationen wird sodann, ebenfalls manuell, ein Befehlsskript erzeugt, mit dem schließlich die anderen Anlagen automatisch konfiguriert werden können. Dabei ist sowohl die zunächst notwendige manuelle Konfiguration der Musteranlage als auch das anschließende Zusammenstellen des Konfigurationsskriptes, das ebenfalls manuell erfolgt, arbeits- und damit kostenintensiv. Ferner besteht wegen der bei einer solchen Konfiguration notwendigen Vielzahl an Einzelschritten stets die Gefahr von Flüchtigkeitsfehlern; darüber hinaus hängt die Qualität dergestalt erzeugter Konfigurationsskripte jeweils in hohem Maße von Geschick und Erfahrung der ausführenden Person ab.

Entsteht auf diese Weise nun ein fehlerhaftes Konfigurationsskript, so vererben sich die hierin enthaltenen Mängel bzw. Fehler selbstverständlich auf sämtliche später mit diesem Skript konfigurierte Anlagen. Ein weiterer wesentlicher Nachteil der bekannten gattungsgemäßen Verfahren liegt jedoch darin, dass sich ein mit diesen Verfahren aufwändig manuell erzeugtes Konfigurationsskript nur zur Konfiguration identischer oder zumindest hochgradig ähnlich aufgebauter Anlagen eignet, da die darin enthaltenen Befehle bzw. Einstellungsdaten lediglich die in der Musteranlage enthaltenen Komponenten berücksichtigen können. Dies bedeutet, dass zur Konfiguration weiterer Anlagen, die lediglich geringfügig von der ursprünglichen Musteranlage abweichen, erneut aufwändig ein für diese abweichende Anlagenkonfiguration passendes Konfigurationsskript erzeugt werden muss, was wiederum die beschriebenen, zahlreichen manuellen Schritte erforderlich macht.

Mit diesem Hintergrund ist es die Aufgabe der vorliegenden Erfindung, ein Verfahren zur Konfiguration bzw. Steuerung einer elektronisch steuerbaren, modularen Anlage, beispielsweise eines Servercomputers, mittels eines anlagenspezifischen Skriptes zu schaffen, das die zuvor genannten Nachteile überwindet, und mit dem sich insbesondere der manuelle Aufwand zur Konfiguration bzw. Steuerung einer Vielzahl unterschiedlicher Anlagen ganz entscheidend verringern lässt.

Diese Aufgabe wird durch ein Verfahren mit den Merkmalen des Patentanspruchs 1 gelöst.

Bevorzugte Ausführungsformen der Erfindung sind Gegenstand der Unteransprüche.

Das Verfahren zur Konfiguration bzw. Steuerung einer Anlage erfolgt dabei in an sich zunächst bekannter Art und Weise anhand der automatischen Abarbeitung eines anlagenspezifischen Skripts, womit die Ausführung einer Mehrzahl von Konfigurationsbefehlen sowie gegebenenfalls die Eingabe von anlagenspezifischen Einstellungsdaten automatisch erfolgt.

Erfindungsgemäß zeichnet sich das Verfahren jedoch dadurch aus, dass das anlagenspezifische Konfigurations- bzw. Steuerskript anhand von Informationen über Art und Komponentenaufbau der Anlage bzw. anhand von Informationen über den momentanen Betriebsstatus der Anlage sowie anhand eines ggf. davon abweichenden Sollzustands, automatisch erzeugt wird.

Damit entfällt zunächst bereits die Notwendigkeit, zur Erzeugung eines Konfigurations- bzw. Steuerskriptes zunächst manuell eine Musteranlage zu konfigurieren, und aus dieser manuellen Musterkonfiguration wiederum manuell das Konfigurationsskript abzuleiten.

Mit anderen Worten lässt sich das Konfigurationsskript gegenüber der sozusagen "manuell-analogen" Vorgehensweise aus dem Stand der Technik dank der Erfindung gewissermaßen "automatisch-digital" bzw. "vorab-virtuell" erzeugen, da zur Erstellung des Skripts gemäß der Erfindung ein eigentlicher Zugriff auf die Anlage gar nicht mehr notwendig ist. Vielmehr kann das Konfigurationsskript, schon vor dem Zeitpunkt der eigentlichen Anlagenkonfiguration, lediglich auf der Basis von über die Anlage vorhandenen Informationen, vorbereitend erzeugt werden.

Darüber hinaus ermöglicht das erfindungsgemäße Verfahren insbesondere die automatisierbare Konfiguration einer Vielzahl von Anlagen, und dies selbst dann, wenn diese Anlagen von unterschiedlicher Art sind oder unterschiedliche Komponenten aufweisen.

Auf welche Weise dabei die automatische Erzeugung des Skripts erfolgt bzw. aus welcher Art von Grundbestandteilen sich das automatisch erzeugte Skript zusammensetzt, ist für die Erfindung zunächst nicht wesentlich, solange sich anhand der über die jeweilige Anlage zur Verfügung stehenden Informationen ein Konfigurationsskript für die jeweilige Anlage erzeugen lässt. So ist es beispielsweise denkbar und möglich, dass die automatische Erzeugung des Konfigurationsskripts dadurch erfolgt, dass anhand der über die Anlage zur Verfügung stehenden Informationen aus einer Bibliothek an Einzelbefehlen die jeweils passenden Befehle entnommen und sodann automatisch zu einem Skript zusammengefügt werden. Ebenso können Skripte beispielsweise anhand eines automatischen Abgleichs der tatsächlichen Anlagenkonfiguration mit verschiedenen gespeicherten Anlagenkonfigurationen und hierzu passenden, gespeicherten Skripten oder Skriptbestandteilen erzeugt werden.

Gemäß einer besonders bevorzugten Ausführungsform der Erfindung besteht das Skript jedoch zumindest teilweise aus Skriptmodulen, wobei jedes Skriptmodul sich wiederum aus einer Anzahl von Einzelbefehlen und/oder gegebenenfalls von Einstellungsdaten zusammensetzt. Dies ist insbesondere insofern vorteilhaft, als auf diese Weise eine automatische Zuordnung zwischen modularen Anlagenkomponenten und den für jede modulare Anlagenkomponente erforderlichen Befehlsfolgen bzw. Skriptmodulen erfolgen kann, was die Zusammenstellung der Skripte erleichtert, beschleunigt sowie systematisiert.

Dabei können diese im Sinne eines systematischen Modulbaukastens einsetz- und verwaltbaren Skriptmodule beispielsweise bereits vom Komponentenhersteller für die einzelnen Anlagenkomponenten mitgeliefert werden, oder sie können beispielsweise von einem Systemverwalter angepasst oder erstellt worden sein. Oftmals sind in einem Unternehmen verteilt ohnehin bereits eine Vielzahl allgemein oder speziell einsetzbarer Einzelskripte vorhanden, die somit ebenfalls in die modulare Skriptbibliothek aufgenommen werden können.

Gemäß einer weiteren bevorzugten Ausführungsform der Erfindung umfassen die Skripte bzw. Skriptmodule variable Felder, wobei die Inhalte der Felder, vorzugsweise mittels einer Parser-Einrichtung, veränderbar sind. Auf diese Weise wird es insbesondere möglich, die Inhalte bzw. Wirkungen von Skriptmodulen oder auch von fertigen Skripten nachträglich gezielt zu verändern, indem beispielsweise bestimmte gewünschte Befehlsoptionen oder bestimmte anlagenspezifische Einstellungsdaten in den Skriptmodulen oder in den Skripten verändert werden. Dabei erfolgt diese Veränderung in den Skriptmodulen oder Skripten besonders bevorzugt durch eine Parser-Einrichtung, die beispielsweise nach dem "Suchen-und-Ersetzen"-Prinzip arbeiten kann.

Hierdurch wird es beispielsweise ermöglicht, mehrere identische Anlagen mit nur einem Skript zu konfigurieren, wobei jedoch zuvor mittels der Parsereinrichtung noch für jede der Anlagen einzelne im Skript enthaltene Felder verändert werden können. Auf diese Weise kann somit eine Feineinstellung bzw. Feinkonfiguration einzelner oder aller zu konfigurierender Anlagen, entsprechend spezieller Anforderungen erfolgen. Besonders vorteilhaft ist es dabei, wenn die Feldinhalte anhand von Informationen über den Komponentenstatus und/oder den Betriebsstatus der Anlage automatisch verändert werden können, da auf diese Weise beispielsweise auch bei einer derartigen Feinkonfiguration oder-Steuerung nur wenige oder keine manuellen Eingriffe mehr erforderlich sind.

Gemäß einer bevorzugten Ausführungsform der Erfindung sind Skripte, Skriptmodule, Feldinhalte sowie Informationen über den Komponentenund/oder Betriebsstatus der Anlage vorzugsweise untereinander verknüpft in einer Datenbank speicherbar. Besonders bevorzugt sind dabei die in der Datenbank gespeicherten Skripte, Skriptmodule und Feldinhalte untereinander sowie mit Merkmalen bzw. Komponenten der Anlage und/oder mit bestimmten Istbetriebszuständen bzw. gespeicherten Sollbetriebszuständen der Anlage verknüpfbar. Auf diese Weise es möglich, rasch und automatisch eine im Wesentlichen beliebige Anzahl unterschiedlicher Konfigurations- bzw. Steuerskripte zu erstellen, die jeweils auf eine spezifische Anlage, eine bestimmte Anlagenzusammensetzung bzw. auf spezifische Ist-Soll-Differenzen im Betriebszustand einer bestimmten Anlage speziell zugeschnitten sind. Dabei kann die Erstellung dieser hochspezifischen Skripte anhand der Verknüpfungen in der Datenbank zugleich mit einem hohen Grad an Systematik, mit großer Fehlersicherheit und hoher Geschwindigkeit sowie automatisch erfolgen.

Für die Erfindung ist es zunächst nicht wesentlich, wodurch und von welcher Stelle aus die Ausführung der Skripte ausgelöst bzw. gestartet wird. So können Skripte beispielsweise lokal an einer Anlage ausgeführt werden, beispielsweise durch Einlegen eines Datenträgers und gegebenenfalls Triggerung des Starts des Skriptes.

Gemäß einer besonders bevorzugten Ausführungsform der Erfindung erfolgen Konfiguration oder Steuerung der Anlage, bzw. Start der Skriptabarbeitung nach Art einer Fernbedienung von einer Steuerkonsole aus. Dies ist insofern besonders vorteilhaft, als auf diese Weise nicht nur der Ablauf der Anlagenkonfiguration selbst, bzw. der Ablauf eines Steuerungszyklus der Anlage ohne manuelle Eingriffe automatisch erfolgen kann, sondern als so zudem auch der Start der Skriptabarbeitung bzw. der Start einer Steuersequenz oder eines Steuerzyklus, gegebenenfalls automatisch, über die Steuerkonsole aus der Ferne erfolgen kann, ohne dass auch hierzu noch manuelle Handgriffe oder Eingaben am Ort der Anlage selbst erforderlich wären.

Gemäß einer bevorzugten Ausführungsform der Erfindung können dabei Steuerkonsole mit Datenbank und Anlage räumlich im wesentlichen beliebig weit voneinander entfernt sein und es wird das Skript zur Ausführung von der Steuerkonsole bzw. aus der Datenbank an die Anlage übermittelt.

Dabei wird das Skript gemäß einer weiteren Ausführungsform der Erfindung in ein an die Anlage übermittelbares Speicherabbild ("Image") eingebunden, wobei die Einbindung des Skripts in das Speicherabbild besonders bevorzugt ebenfalls automatisch erfolgt. Die Einbindung eines Konfigurations- oder Steuerungsskripts in ein Speicherabbild, das sich sodann an die Anlage übermitteln lässt, wo es beispielsweise in einen Speicher der Anlage übernommen werden kann, besitzt insbesondere den Vorteil, dass das Skript auf diese Weise in einen elementaren Betriebssystemkern der Anlage einbindbar ist und somit beispielsweise beim Einschalten bzw. Hochfahren der Anlage selbsttätig ausgeführt werden kann, um so besonders komponenten- bzw. hardwarenahe Operationen bzw. Befehle ausführen zu können.

Ebensogut kann ein in ein Speicherabbild eingebundenes Skript jedoch auch während des normalen Betriebs der Anlage ausgeführt werden, wobei die Ausführung von Konfigurations- oder Steuerungsskripten mittels Speicherabbildern insbesondere den Vorteil mit sich bringt, dass hierfür keine speziellen, ggf. störungsanfälligen oder aufwändigen Steuerungsapplikationen oder sog. Agentenprogramme in der Anlage vorhanden sein oder dort ausgeführt werden müssen. Dies hängt damit zusammen, dass ein in ein geeignetes Speicherabbild eingebundenes Skript unmittelbar auf das Betriebssystem oder auf die Hardware bzw. auf die Komponenten der Anlage zugreifen kann.

Gemäß einer weiteren Ausführungsform der Erfindung können Steuerkonsole und Anlage räumlich ebenfalls voneinander entfernt sein, wobei jedoch das Skript nicht an die Anlage übermittelt und dort ausgeführt wird, sondern das Skript vielmehr lokal durch die Steuerkonsole ausgeführt wird, dort ebenfalls in Steuerbefehle umgewandelt wird, und diese Steuerbefehle sodann an die Anlage übermittelt werden. Dies ist insbesondere vorteilhaft, wenn durch das erfindungsgemäße Verfahren solche Anlagen gesteuert werden sollen, bei denen am Ort der Anlage selbst keine Routinen zur Ausführung von Skripten oder zur Interpretation von Befehlen vorhanden sind, sondern die vielmehr unmittelbar, beispielsweise elektronisch, elektrisch, pneumatisch oder hydraulisch angetrieben bzw. gesteuert werden.

Dies trifft beispielsweise, jedoch keineswegs ausschließlich zu für Fertigungs- oder Förderanlagen in Produktionsbetrieben, die sich auf diese Weise ebenfalls mit dem erfindungsgemäßen Verfahren konfigurieren und/oder steuern lassen. Hierbei ist es besonders vorteilhaft, dass sich eine so gestaltete bzw. ablaufende Anlagensteuerung sehr viel flexibler und individueller an die jeweils vorhandenen Kundenanforderungen anpassen lässt, als dies bei den bekannten Steuerungsprogrammen bzw. -einrichtungen für Anlagen der Fall ist, die zumeist im Wesentlichen starr an die vom Hersteller gestaltete Struktur gebunden sind.

Insbesondere dann, wenn mit dem erfindungsgemäßen Verfahren eine Vielzahl von Anlagen konfiguriert bzw. gesteuert werden soll, ist es besonders wichtig, systematisch Informationen über die beispielsweise auf die einzelnen Maschinen angewandten Konfigurationsskripte sowie über den jeweiligen Erfolg bzw. die Resultate der einzelnen Konfigurations- bzw. Steuerungsschritte zu sammeln und abrufbar zu halten. Mit diesem Hintergrund ist es gemäß einer weiteren Ausführungsform der Erfindung vorgesehen, dass Resultate der Ausführung der jeweiligen Steuerbefehle bzw. über die Ausführung von Skripten oder Skriptteilen an die Steuerkonsole bzw. an die Datenbank zurückgemeldet werden.

Besonders bevorzugt werden die rückgemeldeten Resultate sodann mit der jeweiligen Anlagen- bzw. Komponentenidentifikation und/oder mit den zugehörigen Skripten, Skriptmodulen bzw. Feldinhalten auf geeignete Weise verknüpft und in der Datenbank für einen späteren Zugriff gespeichert. Dies ist insofern besonders vorteilhaft, als auf diese Weise systematische Übersichten bzw. Auswertungen nicht nur über Identifikation und Bestandteile der einzelnen Anlagen, sondern auch über den Stand der jeweiligen Konfiguration jeder Anlage bzw. über den momentanen Betriebszustand oder über vergangene Betriebszustände erstellt werden können. Die ist insbesondere in Umgebungen mit einer Vielzahl an identischen oder unterschiedlichen Anlagen oder in Unternehmen, in denen Anlagen über eine Mehrzahl von Standorten verteilt sind, von großer Bedeutung für die effiziente zentrale Verwaltung und Wartung der Anlagen.

Für die Erfindung ist es zunächst nicht wesentlich, auf welche Weise die der automatischen Skripterstellung zugrunde liegenden Informationen über die Komponenten einer Anlage und/oder über den momentanen Betriebsstatus der Anlagen ermittelt werden. So ist es beispielsweise möglich, die Informationen über die Komponenten, aus denen eine modular aufgebaute Anlage, wie beispielsweise ein Computerserver besteht, bei der Erstaufstellung oder in Form einer Geräteinventur manuell festzuhalten bzw. in eine Datenbank einzugeben. Gemäß einer bevorzugten Ausführungsform der Erfindung werden Informationen über den Komponenten- und/oder Betriebsstatus der Anlage jedoch mittels automatischer Komponenten- bzw. Statusanalyse ermittelt. Hierdurch lässt sich der Aufwand zur manuellen Erfassung bzw. Überwachung des Komponenten- bzw. Betriebsstatus einer Anlage bereits entscheidend verringern.

Besonders bevorzugt wird die Komponenten- bzw. Statusanalyse dabei von der Konsole aus gesteuert. Dies kann beispielsweise über einen speziellen oder standardisierten Fernzugriff auf die Anlage, insbesondere auch vollautomatisch über eine geeignete an der Anlage angeordnete Hardwareschnittstelle erfolgen. Gemäß einer weiteren bevorzugten Ausführungsform der Erfindung erfolgt die Komponenten- bzw. Statusanalyse der Anlage automatisch in regelmäßigen Abständen. Auf diese Weise lässt sich vorteilhaft insbesondere eine permanente automatische Überwachung der Anlage auf Veränderungen an den Anlagenkomponenten bzw. auf Änderungen am Betriebszustand realisieren. Die zeitlichen Abstände zwischen den regelmäßig automatisch durchgeführten Komponenten- bzw. Statusanalysen liegen dabei im Bereich von bevorzugt Sekundenbruchteilen bis Minuten.

Dies ist insbesondere bei Servercomputern von entscheidender Bedeutung, als sich hierdurch beispielsweise verhindern lässt, dass nach dem Austausch einer defekten Komponente gegen ein Ersatzteil, das jedoch eine andere Konfiguration als das ursprüngliche Teil erfordert, der Servercomputer ohne eine entsprechende Anpassung der Konfiguration wieder gestartet wird, da sonst Beschädigungen oder Datenverluste auftreten könnten.

Auf diese Weise lässt sich erreichen, dass, beispielsweise nach Veränderungen an den Komponenten einer Anlage, die zum störungsfreien Betrieb der neuen Komponenten notwendigen Konfigurationsbefehle anhand der automatisch neu ermittelten Konfiguration sowie anhand von in der Datenbank gespeicherten Informationen über die neuen Komponenten in Form eines Konfigurationsskripts automatisch zusammengestellt sowie vor Wiederinbetriebnahme der Anlage automatisch ausgeführt werden.

Die Automatisierung kann auf diese Weise sogar soweit gehen, dass die Konsole einen neuen Servercomputer, der lediglich aufgestellt und an Energieversorgung und Datenleitungen angeschlossen wurde, über die Hardwareschnittstelle automatisch fernidentifiziert und seinen Komponentenaufbau feststellt, daraufhin anhand in der Datenbank gespeicherter Informationen über die Komponenten und über die Sollkonfiguration aus den ebenfalls gespeicherten Skriptmodulen ein Konfigurationsskript erstellt, das sodann an den neu aufgestellten Servercomputer übermittelt und dort automatisch abgearbeitet wird. Durch diese Skriptabarbeitung werden automatisch Hardwarekonfiguration und Betriebssystem- sowie Applikationsinstallation ausführt und es wird der Server schließlich ebenfalls automatisch betriebsfertig auf das Netzwerk aufgeschaltet ("Rack-And-Fire"). Auf diese Weise kann der Aufwand für die Installation und anwenderspezifische Konfiguration einer großen Anzahl von Servercomputern ("Deployment") in einem Unternehmen um Größenordnungen vereinfacht, beschleunigt und verbilligt werden.

Insbesondere bei der Neu- oder Umkonfiguration von Anlagen, beispielsweise von Servercomputern, ist es oftmals erforderlich, vom Servercomputer aus auf gespeicherte Daten zugreifen zu können, wie beispielsweise auf Installationspakete und -daten, die auf externen Datenspeichern wie beispielsweise auf einem Netzlaufwerk gespeichert sind. Zum Zugriff auf derartige Daten sind jedoch oftmals geeignete Zugriffsrechte notwendig, die zumeist mittels Benutzerkennung und Passwort nachzuweisen sind. Zu diesem Zweck werden nach dem Stand der Technik oftmals Benutzerkennungen und Passwörter in automatische Konfigurations- oder Steuerskripte eingebunden. Da diese Einbindung gemäß dem Stand der Technik jedoch oft im Klartext bzw. unverschlüsselt erfolgt, ist damit ein ganz erhebliches Sicherheitsrisiko verbunden, denn mit diesen Benutzerkennungen und Passwörtern lassen sich oft auch vertrauliche Firmendaten zugänglich machen. Mit diesem Hintergrund ist es gemäß einer weiteren bevorzugten Ausführungsform der Erfindung vorgesehen, dass das Skript Benutzerkennungen und Passwörter enthält, wobei Benutzerkennungen und Passwörter jedoch verschlüsselt in das Skript eingebunden werden. Auf diese Weise kann mit großer Sicherheit der Zugriff bzw. die Manipulation vertraulicher Firmendaten durch unbefugte Dritte verhindert werden.

Unternehmen und deren Produktions-, Waren- und Kommunikationsinfrastrukturen erstrecken sich heute oft über eine Mehrzahl voneinander entfernter Standorte. Dies trifft insbesondere zu für die Kommunikations- und Datenstrukturen von nationalen oder internationalen Großunternehmen. Dabei ist es jedoch zumeist notwendig, standortübergreifend einheitliche Standards bei Betrieb und Wartung von Anlagen, insbesondere von Kommunikations- und Datenverarbeitungsanlagen, wie beispielsweise miteinander vernetzter Computerserver sicherzustellen. Zudem sind für Betrieb und Wartung derartiger vernetzter Datenverarbeitungsanlagen qualifizierte Fachkräfte erforderlich, die jedoch aus Kapazitätsgründen nicht zu jeder Zeit an jedem Unternehmens- oder Anlagenstandort verfügbar sein können, um dort Anlagen beispielsweise zu konfigurieren oder aufgetretene Störungen zu beseitigen. Mit diesem Hintergrund ist es gemäß einer weiteren, besonders bevorzugten Ausführungsform der Erfindung vorgesehen, dass die Steuerkonsole vollumfänglich über eine Internet-Benutzeroberfläche bedienbar ist. Auf diese Weise wird es dem Fachpersonal ermöglicht, örtlich sowie zeitlich ungebunden von nahezu jedem internetfähigen Endgerät lokal oder aus der Ferne auf die Steuerkonsole und damit auf Konfiguration, Steuerung und Wartung der mit der Steuerkonsole verbundenen Anlagen zuzugreifen.

Auf welche Weise die Verbindung bzw. der Zugriff der Steuerkonsole auf die Anlagen erfolgt, ist dabei erfindungsgemäß zunächst nicht wesentlich, solange sich über diesen Zugriff Skripte bzw. Speicherabbilder auf die Anlage übertragen lassen und/oder Informationen über den Anlagenstatus an die Steuerkonsole rückgemeldet werden können. Gemäß einer bevorzugten Ausführungsform der Erfindung jedoch erfolgt der Zugriff der Steuerkonsole auf die Anlage über zumindest eine Standardschnittstelle und/oder über eine Standardprotokollsprache. Bei einer solchen Standardschnittstelle kann es sich bei einem Servercomputer beispielsweise um eine PCI-Schnittstelle oder On-Board-Netzwerkschnittstelle handeln, über die zum Beispiel mittels sog. PXE-Images unmittelbar auf die Hardware bzw. die Komponenten des Servercomputers zugegriffen werden kann.

Gemäß einer weiteren bevorzugten Ausführungsform der Erfindung weist die Steuerkonsole Schnittstellen zum Daten- und/oder Befehlaustausch mit zumindest einer weiteren Anlagensteuerungseinrichtung auf. Dabei kann es sich beispielweise um eine bereits zuvor mit der Anlage verbundene Steuerungseinrichtung handeln, die auf diese Weise neben der zusätzlichen Anwendung des erfindungsgemäßen Verfahrens, bzw. neben eines Einsatzes der Steuerkonsole parallel weiterverwendet werden soll. Im Fall eines Servercomputers kann es sich bei der weiteren Steuerungseinrichtung insbesondere um ein bereits existierendes Server- bzw. Netzwerkverwaltungssystem handeln, das zusätzlich zum Einsatz des erfindungsgemäßen Verfahrens auch weiterhin zur Steuerung und Verwaltung des Computerservers verwendet werden soll.

In einem solchen Fall ermöglicht die Schnittstelle der Steuerkonsole einen Daten- und Befehlsaustausch mit der bestehenden Server- bzw. Netzwerkverwaltungsapplikation dergestalt, dass entweder die bestehende Netzwerkverwaltungsapplikation nun ebenfalls von der Steuerkonsole aus, oder umgekehrt die Steuerkonsole von der bestehenden Netzwerkverwaltungsapplikation aus bedient werden kann. Welche der Alternativen tatsächlich genutzt wird, kann dann zum Beispiel von der bevorzugten Arbeitsweise des jeweiligen Anwenders abhängig gemacht werden.

Im folgenden wird die Erfindung anhand einer lediglich ein Ausführungsbeispiel darstellenden Zeichnung näher erläutert.

Es zeigt die einzige
- **Fig.**: in schematischer blockdiagrammartiger Darstellung ein Ausführungsbeispiel der Struktur des erfindungsgemäßen Verfahrens.

In der **Fig.** erkennt man auf der zeichnungsbezogen linken Seite die mittels strichlierter Linie abgegrenzte Datenbank 1, auf die wiederum über eine Konsole 2 lokal oder aus der Ferne, beispielsweise über eine Internet-Benutzeroberfläche, zugegriffen werden kann.

Dabei dient das in der **Fig.** lediglich beispielhaft sowie höchst schematisch als blockdiagrammartige Struktur dargestellte Verfahren der automatisierten Konfiguration bzw. Installation zumindest eines Servercomputers 3, bzw. bevorzugt einer Mehrzahl oder Vielzahl vernetzter Servercomputer 3.

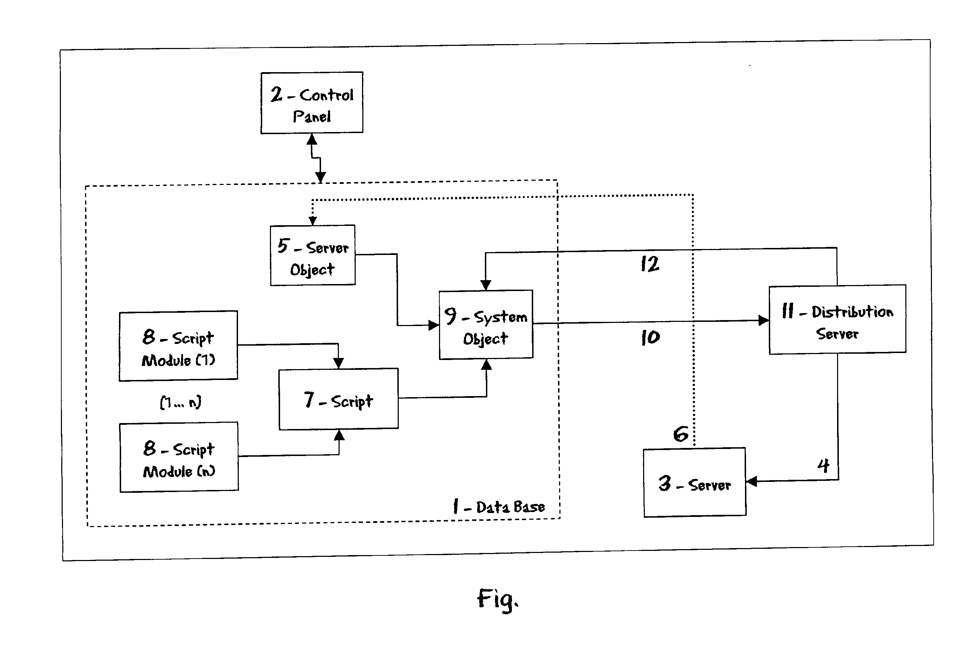

Zunächst geht aus der **Fig**. hervor, dass des dank der Erfindung möglich ist, die zur Vorbereitung der Konfiguration eines Servers 2 notwendigen Vorgänge, die sich sämtlich im Bereich der Datenbank 1 abwickeln lassen, sowohl räumlich als auch insbesondere zeitlich vollständig vom eigentlichen Konfigurations- bzw. Installationsvorgang 4 zu trennen. Dies wird dadurch ermöglicht, dass die Datenbank 1 sämtliche für eine Konfiguration 4 notwendigen Informationen über die Serverhardware 2 in einem Serverobjekt bzw. einer Abbildung 5 der Serverhardware 2 enthält.

Die Information über die Serverhardware 2 kann dabei manuell in die Datenbank 1 eingegeben bzw. übernommen werden, dies kann mittels einer entsprechenden, durch punktierte Linie dargestellten Hardwareerkennung 6 jedoch auch teil- bzw. vollautomatisiert erfolgen. Dabei führt eine automatisierte Hardwareerkennung insbesondere dazu, dass die Serverkonfiguration unmittelbar nach dem Einbau der Serverhardware und dem Anschluss des Servers an das Netzwerk vollautomatisiert erfolgen kann ("Rack-And-Fire").

Aufgrund der in der Datenbank 1 vorhandenen (nicht dargestellten) logischen Verknüpfungen zwischen den in der Serverabbildung 5 enthaltenen Informationen über die Serverkomponenten und den für die Konfiguration der jeweiligen Serverkomponenten notwendigen Befehlsfolgen bzw. Skriptmodulen 8 kann nun automatisch das zur Konfiguration des Servers 2 erforderliche Konfigurationsskript 7 aus den jeweils den Serverkomponenten zugeordneten Skriptmodulen 8 zusammengestellt werden. Hiermit lässt sich, immer noch auf der "virtuellen" Ebene der Datenbank, bereits vor der eigentlichen Konfiguration ein Abbild bzw. Datenbankobjekt des fertig konfigurierten Servers, hier genannt "Systemobjekt" 9 erzeugen. Das Systemobjekt 9 enthält mit anderen Worten sowohl Informationen über die Zusammensetzung der Serverhardware 2 als auch über das individuell auf diese Serverhardware 2 anwendbare bzw. angewendete Skript 7, somit ein detailliertes und exaktes Abbild des konkreten Serverzustands, den dieser nach der Konfiguration aufweist.

Nach der auf diese Weise im Bereich der Datenbank 1 erfolgten Vorbereitung der kompletten Serverkonfiguration kann sodann zu einem beliebigen späteren Zeitpunkt die tatsächliche Konfiguration 4 der Serverhardware 2 durchgeführt werden. Dies kann beispielsweise dadurch erfolgen, dass das vorbereitete, im Systemobjekt 9 enthaltene Skript 7 in ein Speicherabbild (Image) eingefügt wird, welches anschließend an einen an beliebigem Ort im Netzwerk vorhandenen Distributionsserver 11 übertragen werden kann (10). Anschließend kann das auf dem Distributionsserver 11 in Form des Speicherabbilds gespeicherte Skript 7 über das Netzwerk sowie über eine geeignete Schnittstelle an den Server 2 übermittelt, dort beispielsweise in den lokalen Arbeitsspeicher des Servers 2 geschrieben und sodann ausgeführt werden.

Das lokale Ausführen des Konfigurationsskripts 7 erfolgt auf dem Server 2 beispielsweise dadurch, dass das Speicherabbild mit dem darin enthaltenen Skript 7 zum Hochfahren (Booten) des Servers 2 verwendet wird. Es wird somit unmittelbar nach dem durch entsprechenden Hardwarezugriff (z.B. bei 6) ebenfalls fernsteuerbaren Einschalten des Servers 2 automatisch ausgeführt. Durch die im Skript 7 enthaltenen Befehlsfolgen sowie gegebenenfalls Konfigurationsdaten kann sodann die gesamte Hardwarekonfiguration bis hin zur Vorbereitung oder sogar bis hin zur Ausführung der Installation des Serverbetriebssystems vollautomatisch erfolgen.

Insbesondere kann eine solche vollautomatische Serverkonfiguration 4 die Hardwareeinstellungen im BIOS, die Konfiguration von Massenspeichern wie beispielsweise Magnetplatten (RAID-Konfiguration) sowie die zugehörige jeweilige Dokumentation umfassen.

Die Dokumentation der Konfiguration 4 betrifft dabei insbesondere die bei den einzelnen Konfigurationsschritten erstellten Protokolle (Log-Dateien), in denen jeweils Informationen über den Erfolg der einzelnen Konfigurationsschritte enthalten sind. Die Dokumentation wird nach erfolgter Konfiguration 4 sodann an die Datenbank 1 zurückgemeldet (12), wo sie mit dem Serverabbild bzw. mit dem Systemobjekt 9 verknüpft wird.

Dies bedeutet mit anderen Worten, dass nach erfolgter Konfiguration 4 eines Servers 2 in der Datenbank 1 ein sehr detailliertes Abbild 9 des momentanen Konfigurationszustands des Servers 2 gespeichert ist. Dies ist insbesondere bei großen und/oder weitverzweigten Informationsinfrastrukturen, wie sie beispielsweise bei Großunternehmen häufig vorliegen, von ganz entscheidender Bedeutung für ein zuverlässiges und konsistentes Management von Server- und Netzwerkstrukturen.

Denn auf diese Weise wird es beispielsweise möglich, einem Systemverwalter an einem zentralen Arbeitsplatz bzw. einer zentralen Steuerkonsole 2 einen detaillierten Überblick über die an verschiedenen Standorten vorhandenen Serverkonfigurationen 9 zu liefern, diese miteinander strukturiert zu vergleichen und, wo erforderlich, die entsprechenden Anpassungen, Änderungen oder Wartungsarbeiten von ebendiesem zentralen Arbeitsplatz 2 vorzunehmen. Sollten Kapazitätsausweitungen in der Kommunikations- und Datenstruktur eines Unternehmens es beispielsweise erforderlich machen, die Anzahl der vorhandenen Server 2 möglichst kurzfristig und nachhaltig zu erhöhen, so kann aus der Datenbank 1 sogar unmittelbar die gesamte für die Bestellung der weiteren Server 2 beim Lieferanten erforderliche Information unmittelbar an ein Standardbestellformular oder -system (z.B. SAP) übergeben werden, ohne dass hierfür zuvor eine manuelle Inventarisierung notwendig wäre.

Im Ergebnis wird somit deutlich, dass es dank der Erfindung möglich wird, Konfiguration, Steuerung und Wartung von Anlagen, insbesondere von komplexen, umfangreichen und weitverzweigten Servernetzwerken in einem Unternehmen, weitestgehend zu zentralisieren, zu automatisieren und gleichzeitig die Transparenz des Konfigurationszustands jedes einzelnen Bestandteils einer derartigen Anlage bzw. eines derartigen Netzwerks ganz entscheidend zu verbessern. Insbesondere kann so der zur Neu- oder Umkonfiguration einer Vielzahl an Servercomputern notwendige Aufwand dank des erfindungsgemäßen Verfahrens gegenüber dem bekannten, im wesentlichen auf der Vervielfältigung statischer Musterkonfigurationen basierenden Verfahren geradezu um Größenordnungen verringert werden.

## Patentansprüche

1. Verfahren zur Konfiguration (4) bzw. Steuerung einer elektronisch steuerbaren, modularen Anlage (3), insbesondere eines Server-Computers (3), wobei die Konfiguration bzw. Steuerung (4) automatisch anhand zumindest eines anlagenspezifischen Skripts (7) erfolgt,
**dadurch gekennzeichnet,**
**dass** das Skript (7) anhand von Informationen über den Komponenten- und/oder Betriebsstatus der Anlage (3) automatisch erzeugt wird.

2. Verfahren nach Anspruch 1,
**dadurch gekennzeichnet,**
**dass** das Skript (7) aus Skriptmodulen (8) besteht.

3. Verfahren nach Anspruch 2,
**dadurch gekennzeichnet,**
**dass** die Skriptmodule (8) variable Felder enthalten.

4. Verfahren nach Anspruch 3,
**dadurch gekennzeichnet,**
**dass** die in einem Skriptmodul (8) oder in einem Skript (7) enthaltenen Felder mittels einer Parsereinrichtung veränderbar sind.

5. Verfahren nach Anspruch 3 oder 4,
**dadurch gekennzeichnet,**
**dass** die Felder anhand von Informationen über den Komponentenund/oder Betriebsstatus der Anlage (3) automatisch veränderbar sind.

6. Verfahren nach einem der Ansprüche 1 bis 5,
**dadurch gekennzeichnet,**
**dass** Skripte (7), Skriptmodule (8), Feldinhalte sowie Informationen über den Komponenten- und/oder Betriebsstatus der Anlage (3) in einer Datenbank (1) speicherbar sind.

7. Verfahren nach Anspruch 6,
**dadurch gekennzeichnet,**
**dass** Skripte (7), Skriptmodule (8) und/oder Feldinhalte in der Datenbank (1) mit Anlagen- bzw. Komponentenidentifikationen und/oder mit bestimmten Ist- bzw. Sollbetriebszuständen der Anlage (3) verknüpfbar sind.

8. Verfahren nach einem der Ansprüche 1 bis 7,
**dadurch gekennzeichnet,**
**dass** die Konfiguration (4) in Form einer Fernsteuerung von einer Steuerkonsole (2) aus erfolgt.

9. Verfahren nach Anspruch 8,
**dadurch gekennzeichnet,**
**dass** das Skript (7) von der Steuerkonsole (2) bzw. von der Datenbank (1) an die Anlage (3) übermittelt wird.

10. Verfahren nach einem der Ansprüche 1 bis 9,
**dadurch gekennzeichnet,**
**dass** das Skript (7) in ein an die Anlage (3) übermittelbares Speicherabbild eingebunden wird.

11. Verfahren nach Anspruch 10,
**dadurch gekennzeichnet,**
**dass** die Einbindung des Skripts (7) in das Speicherabbild automatisch erfolgt.

12. Verfahren nach Anspruch 8,
**dadurch gekennzeichnet,**
**dass** das Skript (7) durch die Steuerkonsole (2) ausgeführt und in Steuerbefehle umgewandelt wird, und die Steuerbefehle an die Anlage übermittelt werden (10, 4).

13. Verfahren nach einem der Ansprüche 1 bis 12,
**dadurch gekennzeichnet,**
**dass** Resultate (12) der Ausführung der Steuerbefehle bzw. des Skripts (7) an die Konsole (2) bzw. an die Datenbank (1) zurückgemeldet werden.

14. Verfahren nach Anspruch 13,
**dadurch gekennzeichnet,**
**dass** die Resultate (12) mit Anlagen- bzw. Komponentenidentifikation und/oder mit Skripten (7), Skriptmodulen (8) bzw. Feldinhalten verknüpft und in der Datenbank (1) gespeichert werden.

15. Verfahren nach einem der Ansprüche 1 bis 14,
**dadurch gekennzeichnet,**
**dass** die Informationen über den Komponenten- und/oder Betriebsstatus der Anlage durch eine automatisch ablaufende Komponenten- bzw. Statusanalyse (6) ermittelt werden.

16. Verfahren nach Anspruch 15,
**dadurch gekennzeichnet,**
**dass** die Komponenten- bzw. Statusanalyse (6) von der Konsole (2) aus steuerbar ist.

17. Verfahren nach Anspruch 14 oder 15,
**dadurch gekennzeichnet,**
**dass** die Komponenten- bzw. Statusanalyse (6) automatisch in regelmäßigen Abständen erfolgt.

18. Verfahren nach Anspruch 17,
**dadurch gekennzeichnet,**
**dass** die Abstände im Bereich von Sekundenbruchteilen bis Minuten liegen.

19. Verfahren nach einem der Ansprüche 1 bis 18,
**dadurch gekennzeichnet,**
**dass** das Skript (7) Benutzerkennungen und Passwörter enthält, wobei Benutzerkennungen und Passwörter verschlüsselt sind.

20. Verfahren nach einem der Ansprüche 8 bis 19,
**dadurch gekennzeichnet,**
**dass** die Steuerkonsole (2) mittels Internet-Benutzeroberfläche bedienbar ist.

21. Verfahren nach einem der Ansprüche 8 bis 20,
**dadurch gekennzeichnet,**
**dass** die Steuerkonsole (2) über zumindest eine Standardschnittstelle (4, 6) auf die Anlage (3) zugreift.

22. Verfahren nach einem der Ansprüche 8 bis 21,
**dadurch gekennzeichnet,**
**dass** die Steuerkonsole (2) Schnittstellen zum Daten- und Befehlsaustausch mit zumindest einer vorhandenen Anlagensteuerungseinrichtung aufweist.
